# EUROPÄISCHE PATENTSCHRIFT

(11) **EP 3 540 208 B1**
(45) Veröffentlichungstag und Bekanntmachung des Hinweises auf die Patenterteilung: **19.07.2023**
(21) Anmeldenummer: 19160213.5
(22) Anmeldetag: 01.03.2019
(51) Int. Cl.: F02N 3/02

(54) **ANWERFVORRICHTUNG ZUM STARTEN EINES VERBRENNUNGSMOTORS UND HANDGEFÜHRTES ARBEITSGERÄT MIT EINER ANWERFVORRICHTUNG**
MANUALLY-OPERATED TURNING GEAR FOR STARTING A COMBUSTION ENGINE AND A HAND-HELD WORK DEVICE WITH A MANUALLY-OPERATED TURNING GEAR
DÉMARREUR À MAIN PERMETTANT DE DÉMARRER UN MOTEUR À COMBUSTION INTERNE ET APPAREIL DE TRAVAIL GUIDÉ À LA MAIN DOTÉ D'UN DÉMARREUR À MAIN

(30) Priorität: 16.03.2018 DE 102018002133
(43) Veröffentlichungstag der Anmeldung: 18.09.2019
(73) Patentinhaber: Andreas Stihl AG & Co. KG, 71336 Waiblingen (DE)
(72) Erfinder: Densborn, Gerd, 71334 Waiblingen (DE); Schliemann, Harald, 71334 Waiblingen (DE)
(74) Vertreter: Reinhardt, Annette

(56) Entgegenhaltungen:
- EP-A2- 1 413 747
- EP-A2- 1 645 751
- DE-A1- 10 209 012
- JP-A- 2003 097 396
- JP-A- 2004 169 553

## Beschreibung

Die Erfindung betrifft eine Anwerfvorrichtung zum Starten eines Verbrennungsmotors sowie ein handgeführtes Arbeitsgerät mit einer Anwerfvorrichtung.

Aus der DE 102 09 012 B4 ist eine Anwerfvorrichtung für eine Brennkraftmaschine bekannt. Die Anwerfvorrichtung besitzt einen Federspeicher, der eine in einem Innengehäuse angeordnete Spiralfeder aufweist. Am Außenumfang des Innengehäuses ist eine Koppeleinrichtung angeordnet, die nur eine Drehung des Innengehäuses in einer Drehrichtung zulässt. Die Anwerfvorrichtung besitzt eine Seilhaspel, die über einen Ratschen-Rücklaufmechanismus mit dem Innengehäuse gekoppelt ist.

Die EP 1 645 751 A2 zeigt eine Anwerfvorrichtung mit einer Fliehkraftkupplung, deren Klinke am Außenumfang eines Federgehäuses in eine Vertiefung eingreift.

Aus der JP 2003-097396 A ist eine Anwerfvorrichtung mit einer Seilrolle und einem Federgehäuse bekannt, bei der das Federgehäuse die Seilrolle übergreift und eine Klinke der Seilrolle mit einem Vorsprung am Innenumfang des Federgehäuses eine Koppeleinrichtung ausbildet.

Aus der JP 2004-169553 A ist eine Anwerfvorrichtung bekannt, bei der die Seilrolle über eine Koppeleinrichtung mit der Federaufnahme verbunden ist. Die Federaufnahme ist mit einem Getriebe verbunden.

Der Erfindung liegt die Aufgabe zugrunde, eine Anwerfvorrichtung zum Starten eines Verbrennungsmotors zu schaffen, die einen vereinfachten Aufbau besitzt. Eine weitere Aufgabe der Erfindung besteht darin, ein handgeführtes Arbeitsgerät mit einer Anwerfvorrichtung mit vorteilhaftem Aufbau anzugeben.

Diese Aufgabe wird bezüglich der Anwerfvorrichtung durch eine Anwerfvorrichtung mit den Merkmalen des Anspruchs 1 gelöst. Bezüglich des handgeführten Arbeitsgeräts wird die Aufgabe durch ein handgeführtes Arbeitsgerät mit den Merkmalen des Anspruchs 17 gelöst.

Die Erfindung sieht eine Anwerfvorrichtung mit einer ersten Koppeleinrichtung vor. Die erste Koppeleinrichtung stellt bei einer Drehbewegung der Seilrolle in einer Anwerfrichtung eine drehfeste Verbindung zwischen der Seilrolle und dem Federgehäuse her, die bei einer Drehbewegung der Seilrolle in einer der Anwerfrichtung entgegengesetzten Gegenrichtung als Freilauf zwischen der Seilrolle und dem Federgehäuse wirkt. Dadurch kann eine Spannfeder der Anwerfvorrichtung über mehrere Anwerfhübe aufgezogen und gespannt werden. Die erste Koppeleinrichtung besitzt mindestens ein erstes Koppelelement und mindestens ein zweites Koppelelement, die bei der Herstellung der drehfesten Verbindung zwischen Seilrolle und Federgehäuse an mindestens einer ersten Kontaktstelle zusammenwirken. Es ist vorgesehen, dass die mindestens eine erste Kontaktstelle zur Drehachse einen Abstand besitzt, der mindestens so groß ist wie der maximale Abstand der Spannfeder zur Drehachse.

Erfindungsgemäß ist die Koppeleinrichtung zwischen Seilrolle und Federgehäuse demnach nicht wie im Stand der Technik nahe der Drehachse in einem in axialer Richtung der Drehachse zwischen Seilrolle und dem Federaufnahmeraum gebildeten Bauraum angeordnet. Stattdessen ist die erste Koppeleinrichtung so angeordnet, dass die mindestens eine erste Kontaktstelle einen Radialabstand zur Drehachse besitzt, der mindestens so groß ist wie der maximale Abstand der Spannfeder zur Drehachse. Aufgrund des vergleichsweise großen Abstands der mindestens einen ersten Kontaktstelle zur Drehachse und des dadurch bedingten größeren Hebelarms können die Koppelelemente zur Übertragung eines vorgegebenen Drehmoments vergleichsweise klein dimensioniert werden. Es hat sich außerdem gezeigt, dass durch die erfindungsgemäße Anordnung der Koppelelemente der axiale Bauraum der Anwerfvorrichtung verringert werden kann, da das Federgehäuse in axialer Richtung der Drehachse näher an der Seilrolle angeordnet werden kann als im Stand der Technik. Dies ist insbesondere beim Einsatz der Anwerfvorrichtung in handgeführten Arbeitsgeräten vorteilhaft, da bei handgeführten Arbeitsgeräten der Bauraum in Richtung der Drehachse in vielen Fällen wesentlich für die ergonomische Handhabung und Gebrauchstauglichkeit des Arbeitsgeräts ist. Bereits eine Bauraumeinsparung von wenigen Millimetern kann hier einen deutlichen Vorteil bringen. Vorteilhaft liegen alle Koppelelemente der ersten Koppeleinrichtung radial zwischen Federgehäuse und Seilrolle und insbesondere mit ihrer gesamten Ausdehnung radial außerhalb des Federaufnahmeraums.

In vorteilhafter Gestaltung überdecken sich die erste Koppeleinrichtung und die Spannfeder in axialer Richtung der Drehachse. Die erste Koppeleinrichtung und die Spannfeder sind demnach nicht, wie im Stand der Technik, bezogen auf die axiale Richtung der Drehachse nebeneinander angeordnet. Mit anderen Worten ist vorteilhaft vorgesehen, dass der Bauraum, den die Spannfeder in axialer Richtung der Drehachse einnimmt, und der Bauraum, den die erste Koppeleinrichtung in axialer Richtung der Drehachse einnimmt, sich mindestens teilweise überschneiden. Dadurch kann auf einfache Weise ein kompakter Aufbau der Anwerfvorrichtung erreicht werden.

Ein vorteilhafter, kompakter Aufbau wird erreicht, wenn eines der beiden zusammenwirkenden Koppelelemente der ersten Koppeleinrichtung am Federgehäuse angeordnet ist und das andere der beiden Koppelelemente der ersten Koppeleinrichtung an einer konkaven inneren Umfangsfläche der Seilrolle. Hierzu ist besonders bevorzugt vorgesehen, dass die Seilrolle das Federgehäuse mindestens teilweise übergreift. Dadurch wird eine besonders vorteilhafte, kompakte Anordnung der ersten Koppeleinrichtung ermöglicht.

Vorteilhaft wirken ein erstes Koppelelement und ein zweites Koppelement einer zweiten Koppeleinrichtung an einer zweiten Kontaktstelle zusammen. Die mindestens eine zweite Kontaktstelle besitzt zur Drehachse vorteilhaft einen Abstand, der mindestens so groß ist wie der maximale Abstand der Spannfeder zur Drehachse. Sowohl die erste Kontaktstelle als auch die zweite Kontaktstelle sind demnach in einem Abstand zur Drehachse angeordnet, der größer als der maximale Abstand der Spannfeder zur Drehachse ist. Die beiden Koppeleinrichtungen können demnach so angeordnet werden, dass ihre Kontaktstellen radial außerhalb der Spannfeder liegen. Vorteilhaft liegen alle Koppelelemente der ersten Koppeleinrichtung und alle Koppelelemente der zweiten Koppeleinrichtung radial außerhalb des Federaufnahmeraums. Der größte Abstand des Mitnehmers zur Drehachse ist vorteilhaft kleiner als der Abstand der mindestens einen ersten Kontaktstelle zur Drehachse. Der größte Abstand des Mitnehmers zur Drehachse ist insbesondere kleiner als der Abstand der mindestens einer zweiten Kontaktstelle zur Drehachse.

In bevorzugter Ausführung sind das mindestens eine erste Koppelement der ersten Koppeleinrichtung und das mindestens eine Koppelement der zweiten Koppeleinrichtung jeweils eine Klinke. Das mindestens eine zweite Koppelement der ersten Koppeleinrichtung und das mindestens eine zweite Koppelelement der zweiten Koppeleinrichtung sind vorteilhaft jeweils ein Rastnocken. Bevorzugt ist am Federgehäuse mindestens eine Klinke der einen Koppeleinrichtung und der mindestens eine Rastnocken der anderen Koppeleinrichtung angeordnet. Dadurch ergibt sich ein einfacher, vorteilhafter Aufbau. Es kann jedoch auch zweckmäßig sein, am Federgehäuse gleichartige Koppelelemente für die erste Koppeleinrichtung und die zweite Koppeleinrichtung vorzusehen. Am Federgehäuse können demnach beispielweise Klinken der ersten Koppeleinrichtung und Klinken der zweiten Koppeleinrichtung angeordnet sein. In alternativer Ausführung können am Federgehäuse Rastnocken der ersten Koppeleinrichtung und Rastnocken der zweiten Koppeleinrichtung angeordnet sein. Bevorzugt sind am Federgehäuse mindestens eine Klinke der ersten Koppeleinrichtung und mindestens ein Rastnocken der zweiten Koppeleinrichtung angeordnet.

In besonders vorteilhafter Gestaltung ist die mindestens eine erste Kontaktstelle der ersten Koppeleinrichtung in einem ersten axialen Abschnitt der Anwerfvorrichtung angeordnet und die mindestens eine zweite Kontaktstelle der zweiten Koppeleinrichtung ist in einem zweiten axialen Abschnitt der Anwerfvorrichtung angeordnet. Der erste axiale Abschnitt und der zweite axiale Abschnitt überlappen sich vorteilhaft nicht in Richtung der Drehachse. In besonders vorteilhafter Gestaltung besitzen der erste axiale Abschnitt und der zweite axiale Abschnitt in axialer Richtung der Drehachse einen Abstand zueinander. Der Abstand ist dabei vorteilhaft so gewählt, dass die Koppelelemente der ersten Koppeleinrichtung auch bei ungünstiger Toleranzlage nicht mit den Koppelelementen der zweiten Koppeleinrichtung zusammenwirken können. Der axiale Abstand beträgt vorteilhaft 1 mm bis 15 mm. Dem ersten axialen Abschnitt der Anwerfvorrichtung ist insbesondere ein erster Längsabschnitt des Federgehäuses zugeordnet, und dem zweiten axialen Abschnitt der Anwerfvorrichtung ist insbesondere ein zweiter Längsabschnitt des Federgehäuses zugeordnet.

Vorteilhaft ist mindestens ein am Federgehäuse gelagertes Koppelelement eine Klinke, und die Lagerstelle der mindestens einen im Federgehäuse gelagerten Klinke ist bezogen auf die Drehachse radial außerhalb des Federaufnahmeraums angeordnet. Dadurch ergibt sich ein kompakter Aufbau der Anordnung. In besonders bevorzugter Gestaltung ist die gesamte Klinke bezogen auf die Drehachse radial außerhalb des Federaufnahmeraums angeordnet.

In vorteilhafter Gestaltung überlappen sich die erste Koppeleinrichtung und die zweite Koppeleinrichtung in radialer Richtung der Drehachse. In besonders vorteilhafter Gestaltung sind mindestens ein Koppelelement der ersten Koppeleinrichtung und mindestens ein Koppelelement der zweiten Koppeleinrichtung in etwa dem gleichen Abstand zur Drehachse angeordnet.

Besonders vorteilhaft überdecken sich das Federgehäuse und die Seilrolle in axialer Richtung der Drehachse. Das Federgehäuse und die Seilrolle überdecken sich vorzugsweise im ersten axialen Abschnitt der Anwerfvorrichtung in axialer Richtung der Drehachse. Das Federgehäuse besitzt vorteilhaft eine in Richtung der Drehachse gemessene Breite. Die Seilrolle besitzt vorteilhaft eine Ausnehmung, in die das Federgehäuse ragt. Die Seilrolle und das Federgehäuse weisen in besonders vorteilhafter Gestaltung eine axiale Überlappung auf, die mindestens 25% der Breite des Federgehäuses beträgt. Dadurch wird ein kompakter Aufbau der Anwerfvorrichtung erreicht. Vorteilhaft übergreift die Seilrolle das Federgehäuse.

In bevorzugter Gestaltung besitzt das Federgehäuse einen Lagerdom zur Lagerung des Federgehäuses auf einem Lagerzapfen des Gehäuses. Der Lagerdom ragt vorteilhaft in den Federaufnahmeraum hinein. Der Lagerdom liegt demnach zumindest teilweise im gleichen axialen Bauraum wie die Spannfeder. Dadurch werden ein kompakter Aufbau und eine günstige Krafteinleitung zur Lagerstelle erreicht. Kippmomente, die von den Koppeleinrichtungen auf die Lagerstelle des Federgehäuses erzeugt werden, können gering gehalten werden. Dadurch, dass die erste Koppeleinrichtung nicht am Lagerdom angreift, kann der Lagerdom so angeordnet werden, dass sich eine günstige Krafteinleitung ergibt. Vorteilhaft überlappt der Mitnehmer den Lagerdom des Federgehäuses in axialer Richtung der Drehachse. Dadurch kann eine geringe Baugröße in axialer Richtung der Drehachse erreicht werden. In besonders vorteilhafter Gestaltung übergreift der Mitnehmer den Lagerdom des Federgehäuses.

In vorteilhafter Gestaltung umfasst mindestens eine Koppeleinrichtung mindestens zwei erste Koppelelemente, die von einer einzigen Feder beaufschlagt sind. In besonders bevorzugter Gestaltung sind alle Koppelelemente einer Koppeleinrichtung von einer einzigen Feder beaufschlagt. Besonders bevorzugt sind alle ersten Koppelelemente der ersten Koppeleinrichtung von einer ersten Feder beaufschlagt und alle ersten Koppelelemente der zweiten Koppeleinrichtung von einer zweiten Feder.

In vorteilhafter Gestaltung hat die Feder die Form eines Ringsegments und beaufschlagt die mindestens zwei ersten Koppelelemente bezogen auf die Drehachse in radialer Richtung. Die Feder beaufschlagt die Koppelemente in vorteilhafter Gestaltung in Richtung auf die eingekoppelte Stellung, in der die ersten Koppelelemente mit den zweiten Koppelelementen zusammenwirken.

Für ein handgeführtes Arbeitsgerät mit einer Anwerfvorrichtung nach der Erfindung ist vorgesehen, dass das Arbeitsgerät einen Verbrennungsmotor mit einer Kurbelwelle umfasst, und dass die Anwerfvorrichtung über eine dritte Koppeleinrichtung an die Kurbelwelle des Arbeitsgeräts gekoppelt ist. Die dritte Koppeleinrichtung umfasst vorteilhaft am Mitnehmer angeordnete Koppelelemente.

Ein Ausführungsbeispiel der Erfindung wird im Folgenden anhand der Zeichnung erläutert. Es zeigen:
- Fig. 1: eine schematische Ansicht eines Arbeitsgeräts,
- Fig. 2: eine schematische Darstellung eines Schnitts entlang der Linie II-II aus Fig. 1 bei der Anordnung des Arbeitsgeräts an einem Bediener,
- Fig. 3: einen Schnitt durch die Anwerfvorrichtung des Arbeitsgeräts aus den Figuren 1 und 2 entlang der Linie III-III in Fig. 5,
- Fig. 4: eine Explosionsdarstellung der Anwerfvorrichtung aus Fig. 3,
- Fig. 5: einen Schnitt entlang der Linie V-V in Fig. 3,
- Fig. 6: einen Schnitt entlang der Linie VI-VI in Fig. 3,
- Fig. 7: einen Schnitt entlang der Linie VII-VII in Fig. 5,
- Fig. 8: einen Schnitt entlang der Linie VIII-VIII in Fig. 3,
- Fig. 9: eine perspektivische Ansicht der Anwerfvorrichtung in Blickrichtung von der Seilrolle zum Federgehäuse, wobei die Seilrolle nicht dargestellt ist,
- Fig. 10: eine perspektivische Darstellung des Federgehäuses,
- Fig. 11: eine Seitenansicht des Federgehäuses,
- Fig. 12: eine Seitenansicht des Federgehäuses in Richtung des Pfeils XII-XII in Fig. 11,
- Fig. 13: eine Seitenansicht des Federgehäuses in Richtung des Pfeils XIII-XIII in Fig. 11.

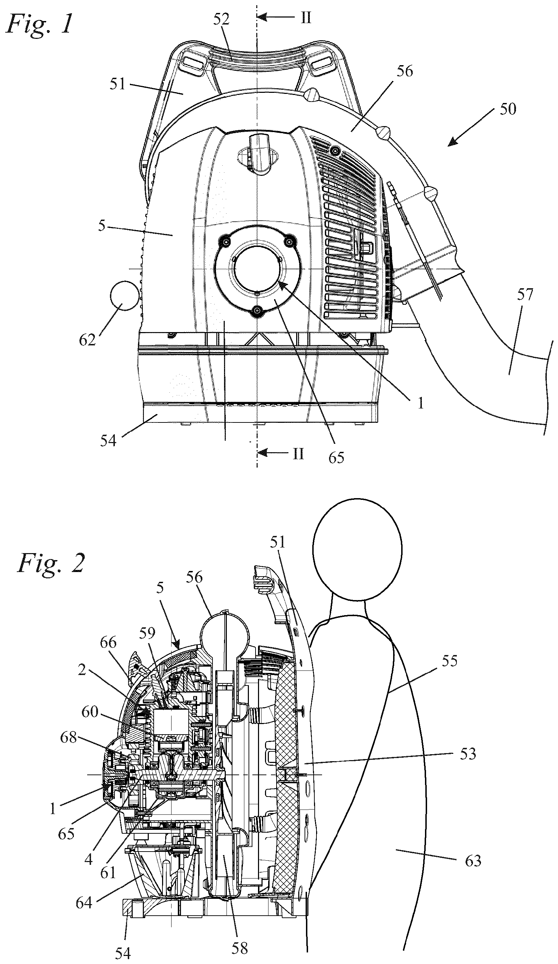

Fig. 1 zeigt als Ausführungsbeispiel für ein Arbeitsgerät 50 ein Blasgerät, nämlich ein rückengetragenes Blasgerät. Die erfindungsgemäße Anwerfvorrichtung kann jedoch auch bei anderen Arbeitsgeräten, insbesondere bei handgeführten Arbeitsgeräten wie Motorsägen, Freischneidern, Trennschleifern, handgetragenen Blasgeräten oder dgl. vorteilhaft sein. Das Arbeitsgerät 50 besitzt eine Rückentrage 51, an der im Ausführungsbeispiel ein Tragegriff 52 ausgebildet ist. Das Arbeitsgerät 50 besitzt ein mehrteiliges Gehäuse 5. Ein Teil des Gehäuses 5 wird durch ein Anwerfergehäuse 65 gebildet, das Teil einer Anwerfvorrichtung 1 ist. In Fig. 1 ist ein Anwerfgriff 62 der Anwerfvorrichtung 1 schematisch dargestellt. Das Arbeitsgerät 50 umfasst außerdem eine Gebläsespirale 56, an der ein Blasrohr 57 angeschlossen ist. Das Arbeitsgerät 50 fördert durch die Gebläsespirale 56 und das Blasrohr 57 einen Blasluftstrom, der als Arbeitsluftstrom beispielsweise zum Entfernen von Laub oder dgl. genutzt werden kann.

Die Rückentrage 51 umfasst, wie insbesondere Fig. 2 zeigt, eine Rückenplatte 53 sowie eine Bodenplatte 54. Die Rückentrage 51 wird von einem Bediener 63 mit Traggurten 55 auf dem Rücken getragen. Im Ausführungsbeispiel ist außerhalb des Gehäuses 5 ein Kraftstofftank 64 angeordnet. Der Kraftstofftank 64 ist auf der Bodenplatte 54 angeordnet. Das Gehäuse 5 umfasst neben dem Anwerfergehäuse 65 ein Motorgehäuse 66, in dem ein Verbrennungsmotor 2 angeordnet ist. Der Verbrennungsmotor 2 weist einen Zylinder 59 auf, in dem ein Kolben 60 hin- und hergehend angeordnet ist. Der Kolben 60 treibt eine Kurbelwelle 4 rotierend an. Die Kurbelwelle 4 treibt im Betrieb ein Gebläserad 58 rotierend an, das den Arbeitsluftstrom fördert. Die Kurbelwelle 4 ist in einem Kurbelgehäuse 61 drehbar gelagert.

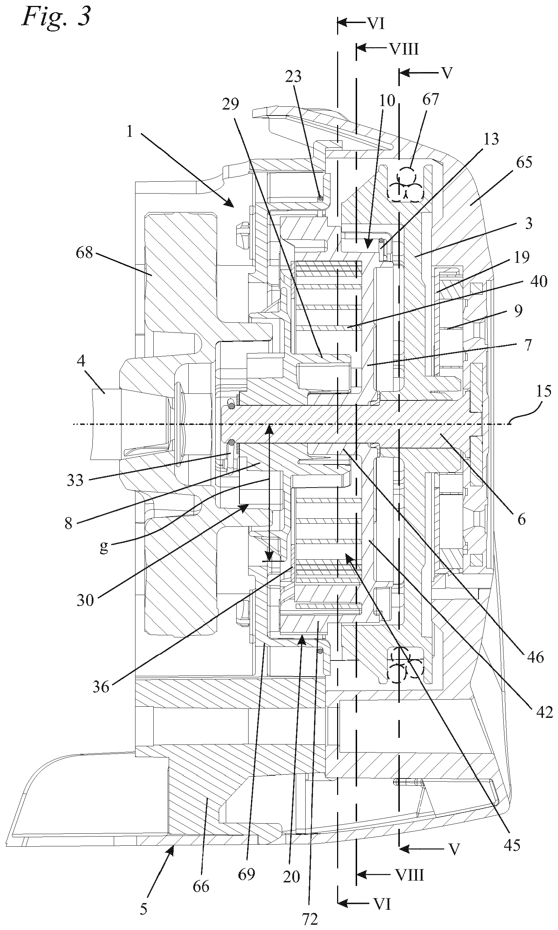

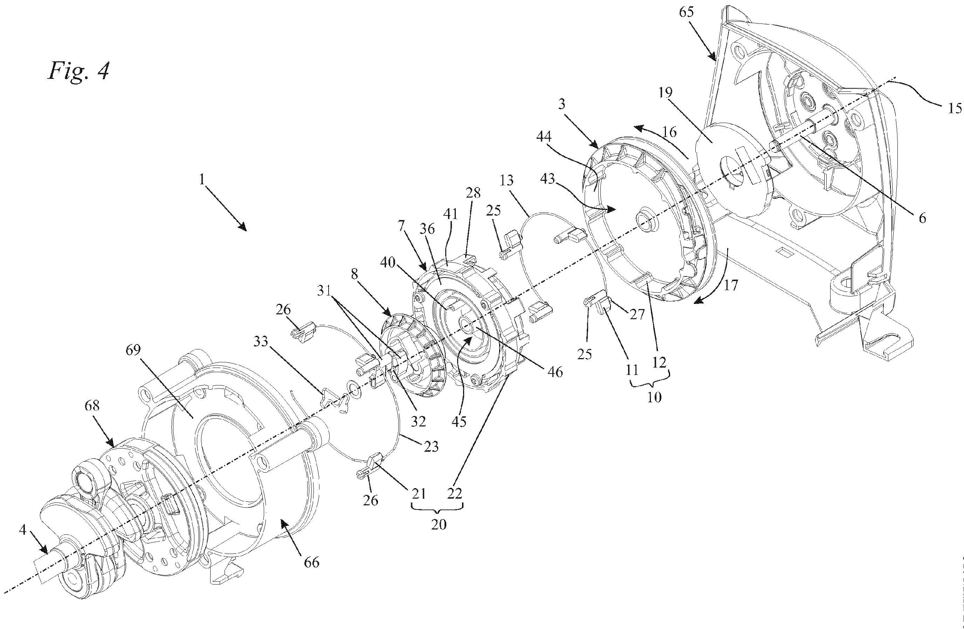

Die Anwerfvorrichtung 1 dient zum Anwerfen des Verbrennungsmotors 2. Der Aufbau der Anwerfvorrichtung 1 ist in Fig. 3 gezeigt. Am Anwerfgriff 62 ist ein in Fig. 3 mit gestrichelter Linie schematisch dargestelltes Anwerfseil 67 fixiert. Zum Starten des Verbrennungsmotors 2 zieht der Bediener am Anwerfgriff 62 (Fig. 1). Das Anwerfseil 67 ist auf einer in Fig. 3 gezeigten Seilrolle 3 aufgewickelt. Der Zug am Anwerfseil 67 versetzt die Seilrolle 3 in einer Anwerfrichtung 16 (Fig. 4) in Rotation um eine Drehachse 15. Die Seilrolle 3 ist in Anwerfrichtung 16 über eine erste Koppeleinrichtung 10, die auch in Fig. 4 gezeigt ist, mit einem Federgehäuse 7 gekoppelt. Im Federgehäuse 7 ist eine Spannfeder 40 angeordnet, die im Ausführungsbeispiel als Spiralfeder ausgebildet ist. Im Federgehäuse 7 ist ein Federaufnahmeraum 45 ausgebildet, in dem die Spannfeder 40 angeordnet ist. Ein Ende der Spannfeder 40 ist mit dem Federgehäuse 7 fest verbunden. Das andere Ende der Spannfeder 40 ist an einem Mitnehmer 8 fixiert. Der Mitnehmer 8 ist seinerseits in Anwerfrichtung 16 über eine dritte Koppeleinrichtung 30 mit einem Schwungrad 68 gekoppelt. Das Schwungrad 68 ist drehfest mit der Kurbelwelle 4 verbunden. Zum Mitnehmer 8 hin ist der Federaufnahmeraum 45 nur teilweise verschlossen. Im Ausführungsbeispiel ist eine ringförmige Abdeckplatte 36 vorgesehen, die das Federgehäuse teilweise verschließt.

Bei Zug am Anwerfseil 67 wird die Seilrolle 3 in Rotation versetzt. Über die erste Koppeleinrichtung 10 nimmt die Seilrolle 3 das Federgehäuse 7 mit. Dadurch wird die Spannfeder 40 aufgezogen. Die Spannfeder 40 spannt den Mitnehmer 8 und über die Koppeleinrichtung 30 die Kurbelwelle 4 in Anwerfrichtung 16 vor. An der Kurbelwelle 4 wirkt eine vom Kolben 60 auf die Kurbelwelle 4 übertragene Gegenkraft, die von dem komprimierten Gas im Brennraum erzeugt wird. Solange die in der Spannfeder 40 gespeicherte Kraft nicht ausreicht, um den Kolben 60 (Fig. 2) über den oberen Totpunkt des Kolbens 60 zu bewegen bzw. um den Verbrennungsmotor 2 zu starten, kann der Bediener durch mehrmaliges Ziehen am Anwerfseil 67 die Spannfeder 40 aufziehen.

Am Federgehäuse 7 wirkt eine zweite Koppeleinrichtung 20. Die zweite Koppeleinrichtung 20 wirkt zwischen dem Federgehäuse 7 und einer Halteplatte 69 des Motorgehäuses 66. Die Halteplatte 69 bildet damit einen Teil des Motorgehäuses 66 und damit einen Teil des Gehäuses 5. Die Halteplatte 69, das Motorgehäuse 66 und das Anwerfergehäuse 65 sind ortsfest zueinander angeordnet. Die Seilrolle 3, das Federgehäuse 7, die Spannfeder 40, der Mitnehmer 8 und das Schwungrad 68 sowie die Kurbelwelle 4 sind gegenüber dem Gehäuse 5 um die Drehachse 15 drehbar gelagert. Hierzu sind Seilrolle 3, Federgehäuse 7 und Mitnehmer 8 auf einem Lagerzapfen 6 drehbar gelagert. Der Lagerzapfen 6 ist fest mit dem Anwerfergehäuse 65 verbunden.

Die zweite Koppeleinrichtung 20 blockiert eine Drehung des Federgehäuses 7 entgegen der Anwerfrichtung. Am Ende eines Anwerfhubs kann der Bediener daher den Anwerfgriff 62 loslassen. Die Seilrolle 3 ist von einer Rückholfeder 9 beaufschlagt, die die Seilrolle 3 entgegen der Anwerfrichtung 16 aufrollt. Bei dieser Drehung in der der Anwerfrichtung 16 entgegen gerichteten Gegenrichtung 17 (Fig. 4) ist die Seilrolle 3 vom Federgehäuse 7 über die erste Koppeleinrichtung 10 entkoppelt. Die Seilrolle 3 kann sich gegenüber dem Federgehäuse 7 drehen. Ein Zurückdrehen des Federgehäuses 7 und damit ein Entspannen der Spannfeder 40 wird durch die zweite Koppeleinrichtung 20 verhindert.

Wie Fig. 3 auch zeigt, ist die Rückholfeder 9 in einem Rückholfedergehäuse 19 angeordnet, das zu der der Seilrolle 3 abgewandten Seite hin offen ist. Diese Seite wird vom Anwerfergehäuse 65 verschlossen. Wie Fig. 3 auch zeigt, besitzt das Federgehäuse 7 einen Lagerdom 46, mit dem es auf dem Lagerzapfen 6 drehbar gelagert ist. Das Federgehäuse 7 besitzt eine Seitenwand 42, die im Ausführungsbeispiel etwa senkrecht zur Drehachse 15 verläuft. Die Seitenwand 42 erstreckt sich zwischen dem Lagerdom 46 und einer Umfangswand 72 des Federgehäuses 7. Die der Seilrolle 3 zugewandte Außenseite der Seitenwand 42 ist im Ausführungsbeispiel eben ausgebildet. Der Lagerdom 46 ragt von der Seitenwand 42 des Federgehäuses 7 in Richtung zum Mitnehmer 8 und zur Kurbelwelle 4. Der Lagerdom 46 ragt in den Federaufnahmeraum 45, in dem die Spannfeder 40 angeordnet ist. Wie Fig. 3 auch zeigt, ist am Lagerdom 46 benachbart zum Mitnehmer 8 eine Betätigungsklammer 33 der dritten Koppeleinrichtung 30 gehalten. Der Mitnehmer 8 besitzt einen maximalen Abstand g zur Drehachse 15. Der Mitnehmer 8 ist dabei vergleichsweise klein ausgebildet und erstreckt sich in radialer Richtung zur Drehachse 15 nicht über das Federgehäuse 7 hinaus.

Fig. 4 zeigt den Aufbau der Anwerfvorrichtung 1 im Einzelnen. Die erste Koppeleinrichtung 10 umfasst erste Koppelelemente 11, die im Ausführungsbeispiel als schwenkbar gelagerte Klinken ausgebildet sind. Die ersten Koppelelemente 11 sind mit Lagerzapfen 25 am Federgehäuse 7 schwenkbar gelagert. Die ersten Koppelelemente 11 besitzen jeweils einen Betätigungszapfen 27. Die Betätigungszapfen 27 sind im Ausführungsbeispiel von einer gemeinsamen ersten Feder 13 in radialer Richtung zur Drehachse 15 vorgespannt. Die Betätigungszapfen 27 sind von der ersten Feder 13 so beaufschlagt, dass die Koppelelemente 11 radial nach außen gedrückt werden. Die Seilrolle 3 besitzt eine Ausnehmung 43, in die das Federgehäuse 7 ragt. Die Ausnehmung 43 besitzt eine innere Umfangsfläche 44, an der zweite Koppelelemente 12 vorgesehen sind. Im Ausführungsbeispiel sind die zweiten Koppelelemente 12 als Rastnocken ausgebildet. Vorteilhaft sind mehrere erste Koppelelemente 11 und mehrere zweite Koppelelemente 12 vorgesehen. Vorzugsweise ist die Anzahl der Rastnocken deutlich größer als die der Klinken. Die ersten Koppelelemente 11 werden von der Feder 13 in Richtung auf die innere Umfangsfläche 44 vorgespannt. Die erste Feder 13 ist als Ringsegment ausgebildet. Es kann jedoch auch vorgesehen sein, dass nur zwei Koppelelemente 11 von einer gemeinsamen Feder 13 beaufschlagt sind, oder dass für jedes Koppelelement 11 eine separate Feder vorgesehen ist. Das Federgehäuse 7 besitzt Haltearme 28, an denen die Feder 13 gehalten ist.

Es kann in alternativer Gestaltung vorgesehen sein, dass die ersten Koppelelemente 11 als Rastnocken und die zweiten Koppelelemente 12 als Klinken ausgebildet sind. Auch eine andere Gestaltung der ersten und zweiten Koppelelemente 11, 12 kann vorteilhaft sein.

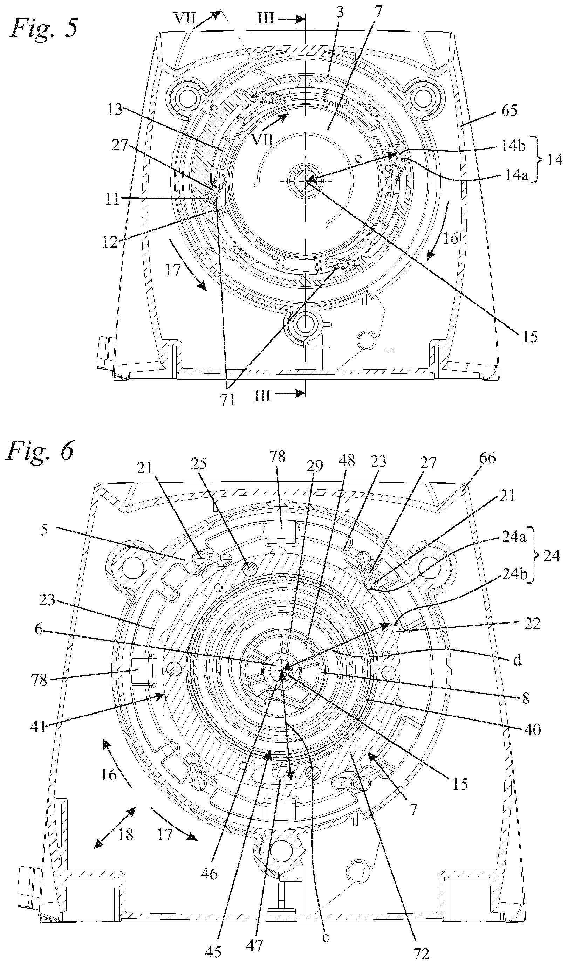

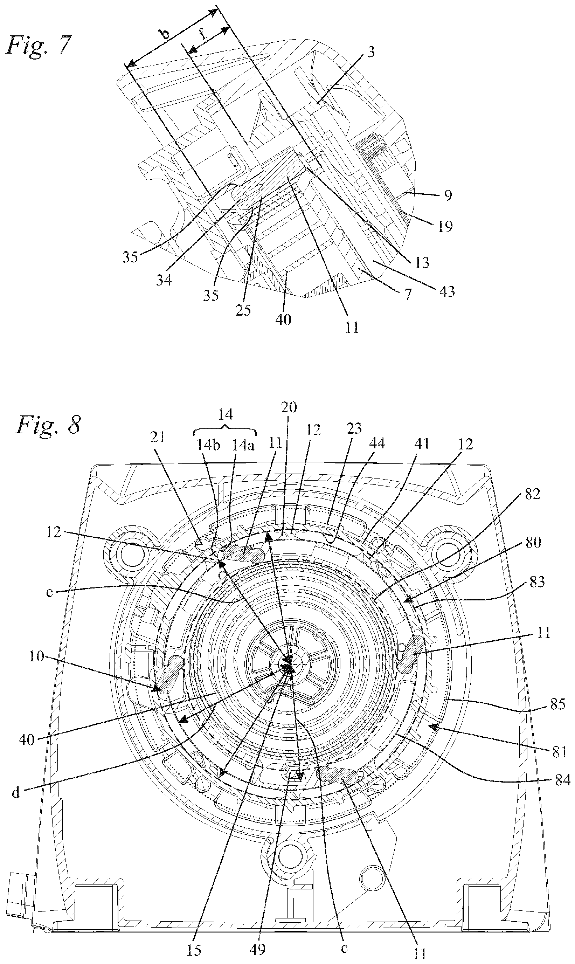

Wie Fig. 4 auch zeigt, ragt der Lagerdom 46 in den Federaufnahmeraum 45. Das Federgehäuse 7 besitzt einen Außenumfang 41. An dem Außenumfang 41 sind zweite Koppelelemente 22 angeordnet. An dem Außenumfang 41 sind außerdem Koppelelemente 11 der ersten Koppeleinrichtung 10 angeordnet, wie auch Fig. 8 zeigt. Die zweiten Koppelelemente 22 sind im Ausführungsbeispiel als Rastnocken ausgebildet. Die zugehörigen ersten Koppelelemente 21 sind im Ausführungsbeispiel als Klinken ausgebildet. Die ersten Koppelelemente 21 besitzen jeweils einen Lagerzapfen 26, mit dem sie am Motorgehäuse 66 schwenkbar gelagert sind. Die ersten Koppelelemente 21 besitzen jeweils einen Betätigungszapfen 27 (Fig. 5), an dem sie von einer zweiten Feder 23 beaufschlagt sind. Im Ausführungsbeispiel ist eine einzige zweite Feder 23 für alle ersten Koppelelemente 21 vorgesehen. Die zweite Feder 23 spannt die ersten Koppelelemente 21 der zweiten Koppeleinrichtung 20 radial nach innen in Richtung auf den Außenumfang 14 des Federgehäuses 7 vor. Die zweite Feder 23 ist als Ringsegment ausgebildet. Die beiden Federn 13 und 23 sind koaxial zueinander sowie koaxial zur Drehachse 15 angeordnet.

Es kann auch vorgesehen sein, die im Ausführungsbeispiel als Klinken ausgeführten Koppelelemente 11, 21 als Rastelemente, insbesondere als Rastnocken auszubilden, so dass sich eine genau umgekehrte Anordnung ergibt. Es kann auch zweckmäßig sein, die im Ausführungsbeispiel als Klinken ausgeführten Koppelemente 11, 21 teilweise als Rastelemente auszubilden, so dass am Federgehäuse 7 ausschließlich Klinken oder ausschließlich Rastelemente angeordnet sind und entsprechend an der Seilrolle 3 bzw. dem Gehäuse 5 ausschließlich Rastelemente bzw. Klinken.

Zur Verbindung des Mitnehmers 8 mit dem Schwungrad 68 ist die dritte Koppeleinrichtung 30 vorgesehen. Die dritte Koppeleinrichtung 30 besitzt im Ausführungsbeispiel Klinken 31 als Koppelelemente. Die Klinken 31 sind am Mitnehmer 8 gelagert. Die Klinken 31 werden bei einer Relativbewegung des Mitnehmers 8 gegenüber dem Lagerzapfen 6 in Anwerfrichtung 16 von der Betätigungsklammer 33 nach außen geschwenkt, so dass die Klinken 31 mit entsprechenden Rastnocken am Schwungrad 68 in Eingriff kommen können.

Wie Fig. 5 zeigt, besitzt die erste Feder 13 zwei Federenden 71, die radial nach außen umgebogen sind. Dadurch ist die erste Feder 13 in Umfangsrichtung an den beiden benachbart zu den Federenden 71 liegenden Betätigungszapfen 27 gesichert. Wie Fig. 5 auch zeigt, besitzen die im Ausführungsbeispiel am Federgehäuse 7 angeordneten ersten Koppelelemente 11 Kontaktbereiche 14a, und die im Ausführungsbeispiel an der Seilrolle 3 angeordneten zweiten Koppelemente 12 der ersten Koppeleinrichtung 10 besitzen Kontaktbereiche 14b. In eingekuppeltem Zustand der ersten Koppeleinrichtung 10, also wenn über die erste Koppeleinrichtung 10 eine Drehung der Seilrolle 3 in Anwerfrichtung 16 auf das Federgehäuse 7 übertragen wird, kommen die Kontaktbereiche 14a und 14b an einer ersten Kontaktstelle 14 miteinander in Kontakt und stellen eine in Anwerfrichtung 16 drehfeste Verbindung zwischen Seilrolle 3 und Federgehäuse 7 her. Die erste Kontaktstelle 14 besitzt zur Drehachse 15 einen minimalen Abstand e. Der Abstand e ist kleiner oder gleich dem Radius der Ausnehmung 43 der Seilrolle 3 und größer oder gleich dem Radius des Außenumfangs 41 des Federgehäuses 7. Die ersten Kontaktstellen 14 sind im Ausführungsbeispiel radial außerhalb des Federaufnahmeraums 45, also in der gleichen Schnittebene senkrecht zur Drehachse 15, aber in größerem radialen Abstand zur Drehachse 15, angeordnet. Der Abstand e ist größer als der maximale Abstand g des Mitnehmers 8 zur Drehachse 15 (Fig. 3). In Richtung der Drehachse 15 gesehen, liegen alle Kontaktstellen 14 demnach radial außerhalb des Mitnehmers 8. Bei einer Drehung der Seilrolle 3 in Gegenrichtung 17 lenken die zweiten Koppelelemente 12 die ersten Koppelelemente 11 radial nach innen aus. Dadurch ist eine Drehung der Seilrolle 3 gegenüber dem Federgehäuse 7 in Gegenrichtung 17 möglich. Wie Fig. 5 zeigt, sind im Ausführungsbeispiel vier erste Koppelelemente 11 und zehn zweite Koppelelemente 12 vorgesehen.

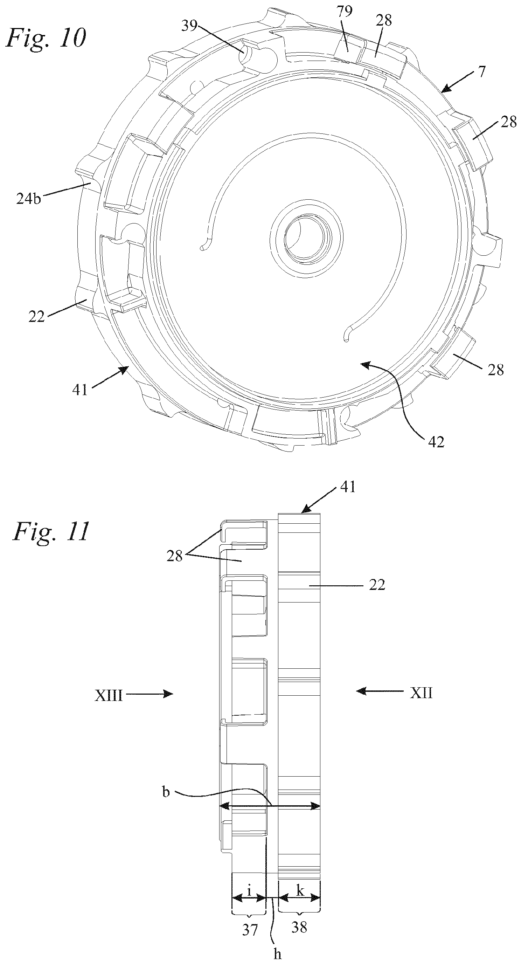

Wie Fig. 11 zeigt, besitzt das Federgehäuse 7 einen ersten Längsabschnitt 37 und einen zweiten Längsabschnitt 38. Der Längsabschnitt 37 ist der Längsabschnitt, in dem die ersten Kontaktstellen 14 angeordnet sind. Der Längsabschnitt 38 ist der Längsabschnitt, in dem die zweiten Kontaktstellen 24 angeordnet sind. Der erste Längsabschnitt 37 wird auch als erster axialer Abschnitt bezeichnet. Der zweite Längsabschnitt 38 wird auch als zweiter axialer Abschnitt bezeichnet.

Fig. 6 zeigt einen Schnitt durch den Federaufnahmeraum 45 des Federgehäuses 7 in einem Bereich zwischen dem ersten Längsabschnitt 37 und dem zweiten Längsabschnitt 38 des Federgehäuses 7. Wie die Figur zeigt, besitzt die Spannfeder 40 ein äußeres Ende 47 und ein inneres Ende 48. Mit ihrem äußeren Ende 47 ist die Spannfeder 40 an der Umfangswand 72 des Federgehäuses 7 eingehängt. Mit ihrem anderen, inneren Ende 48 ist die Spannfeder 40 an einem Einhängestutzen 29 des Mitnehmers 8 eingehängt. Wie Fig. 2 und Fig. 6 zeigen, übergreift der Einhängestutzen 29 den Lagerdom 46. Der Mitnehmer 8 und der Lagerdom 46 überlappen sich in axialer Richtung der Drehachse 15.

Wie Fig. 6 auch zeigt, sind die Lagerzapfen 25 der ersten Koppelelemente 11 der ersten Koppeleinrichtung 10 in der Umfangswand 72 gelagert. Die ersten Koppelelemente 21 der zweiten Koppeleinrichtung 20 sind am Gehäuse 5, im Ausführungsbeispiel am Motorgehäuse 66, schwenkbar gelagert. Am Außenumfang 41 der Umfangswand 72 sind im zweiten Längsabschnitt 38 die zweiten Koppelelemente 22 der zweiten Koppeleinrichtung 20 angeordnet. Die zweiten Koppelelemente 22 besitzen Kontaktbereiche 24b. Die im Ausführungsbeispiel am Gehäuse 5 gelagerten ersten Koppelelemente 21 der zweiten Koppeleinrichtung 20 besitzen Kontaktbereiche 24a. Die Kontaktbereiche 24a und 24b sind die Bereiche der Koppelelemente 21 und 22, die bei einer drehfesten Verbindung zwischen dem Federgehäuse 7 und dem Gehäuse 5 miteinander in Kontakt kommen und die drehfeste Verbindung herstellen. Die zweiten Kontaktstellen 24 besitzen zur Drehachse 15 einen minimalen Abstand d. Der kleinste Abstand d ist zum radial innersten Bereich der Kontaktstelle 24 gemessen. Der Abstand d ist dabei in einer Radialrichtung 18, also radial zur Drehachse 15, gemessen.

Am Außenumfang der Umfangswand 72 des Federgehäuses 7 sind im ersten Längsabschnitt 37 des Federgehäuses 7 Koppelelemente der ersten Koppeleinrichtung 10 angeordnet, und im zweiten Längsabschnitt 38 sind Koppelelemente der zweiten Koppeleinrichtung 20 angeordnet.

Wie Fig. 6 auch zeigt, besitzt die Spannfeder 40 zur Drehachse 15 einen maximalen Abstand c. Im Ausführungsbeispiel ist der maximale Abstand c zum äußeren Ende 47 der Spannfeder 40 gemessen. Der Abstand d der zweiten Kontaktstellen 24 zur Drehachse 15 ist größer als der maximale Abstand c der Spannfeder 40 zur Drehachse 15. Die zweiten Kontaktstellen 24 liegen demnach radial weiter außen als die Spannfeder 40. Die zweiten Kontaktstellen 24 sind im Ausführungsbeispiel radial außerhalb des Federaufnahmeraums 45, also in der gleichen Schnittebene senkrecht zur Drehachse 15, aber in größerem radialen Abstand zur Drehachse 15, angeordnet. Der maximale Abstand g des Mitnehmers 8 zur Drehachse 15 ist kleiner als der Abstand e.

Wie Fig. 6 auch zeigt, sind am Gehäuse 5 Haltearme 78 angeordnet, an denen die zweite Feder 23 gehalten ist. Die zweite Feder 23 beaufschlagt die ersten Koppelelemente 21 der zweiten Koppeleinrichtung 20 radial nach innen, also in Radialrichtung 18 in Richtung auf die Drehachse 15.

Wird das Federgehäuse 7 in Anwerfrichtung 16 gedreht, so lenken die zweiten Koppelelemente 22 die ersten Koppelelemente 21 entgegen der Kraft der zweiten Feder 23 radial nach außen aus. Dadurch kann das Federgehäuse 7 gegenüber dem Gehäuse 5 in Anwerfrichtung 16 gedreht und so die Spannfeder 40 gespannt werden. Eine Drehung des Federgehäuses 7 gegenüber dem Gehäuse 5 in Gegenrichtung 17 wird von den ersten Koppelelementen 21 und den zweiten Koppelelementen 22 blockiert. Dabei kommen die Koppelelemente 21, 22 an zweiten Kontaktstellen 24 miteinander in Kontakt. Im Ausführungsbeispiel sind vier erste Koppelelemente 21 und zehn zweite Koppelelemente 22 vorgesehen. Auch eine andere Anzahl erster und/oder zweiter Koppelelemente 21, 22 kann voreilhaft sein. Es kann auch vorgesehen sein, die ersten Koppelelemente 21 als Rastnocken und die zweiten Koppelelemente 22 als Klinken auszubilden. Auch eine andere Gestaltung der Koppelelemente 21, 22 kann vorteilhaft sein.

Wie Fig. 7 zeigt, besitzen die Lagerzapfen 25 der ersten Koppelelemente 11 einen Schlitz 34 sowie Rastvorsprünge 35. Die Lagerzapfen 25 sind in Aufnahmeöffnungen 39 des Federgehäuses 7 (Fig. 10) eingeklipst. Die Lagerzapfen 26 der ersten Koppelelemente 21 der zweiten Koppeleinrichtung 20 sind entsprechend ausgebildet und in entsprechende, nicht gezeigte Aufnahmeöffnungen der Halteplatte 69 des Motorgehäuses 66 eingeklipst.

Wie Fig. 7 zeigt, besitzt das Federgehäuse eine in Richtung der Drehachse 15 gemessene Breite b. Das Federgehäuse 7 ragt mit dem ersten Längsabschnitt 37 in die Ausnehmung 43 der Seilrolle 3. An seinem Außenumfang ist das Federgehäuse 7 von der Seilrolle 3 teilweise übergriffen. Die Seilrolle 3 und das Federgehäuse 7 besitzen eine axiale Überlappung f, die mindestens 25%, insbesondere mindestens 30% der Breite b des Federgehäuses 7 beträgt. Die axiale Überlappung f und die Breite b sind dabei parallel zueinander und in Richtung der Drehachse 15 gemessen. Aufgrund der axialen Überlappung f ergibt sich eine geringe axiale Baubreite der Anwerfvorrichtung 1. Die axiale Überlappung f beträgt vorteilhaft weniger als 70%, insbesondere weniger als 50% der Breite b.

Fig. 8 zeigt einen Schnitt durch die erste Koppeleinrichtung 10. In Fig. 8 ist auch die erste Kontaktstelle 14 mit den Kontaktbereichen 14a und 14b eingezeichnet. Wie Fig. 8 auch zeigt, sind die zweiten Koppelemente 12 der ersten Koppeleinrichtung 10 und die zweiten Koppelelemente 22 der zweiten Koppeleinrichtung 20 im näherungsweise gleichen Abstand zur Drehachse 15 angeordnet.

Alle Koppelelemente 11, 12 der ersten Koppeleinrichtung 10 liegen in einem ersten Ringraum 80. Der erste Ringraum 80 erstreckt sich zwischen einer inneren Begrenzung 82 und einer äußeren Begrenzung 83, die in Fig. 8 mit gestrichelter Linie eingezeichnet sind. Alle Koppelelemente 21, 22 der zweiten Koppeleinrichtung 20 liegen in einem zweiten Ringraum 81. Der zweite Ringraum 81 erstreckt sich zwischen einer inneren Begrenzung 84 und einer äußeren Begrenzung 85, die in Fig. 8 mit punktierter Linie eingezeichnet sind. Der erste Ringraum 80 und der zweite Ringraum 81 liegen radial außerhalb des Federaufnahmeraums 45. Der erste Ringraum 80 und der zweite Ringraum 81 überschneiden sich in Richtung der Drehachse 15 gesehen mindestens teilweise. Damit überlappen sich die erste Koppeleinrichtung 10 und die zweite Koppeleinrichtung 20 in radialer Richtung der Drehachse 15. In axialer Richtung der Drehachse 15 liegen die beiden Ringräume 80 und 81 nebeneinander, insbesondere mit geringem Abstand nebeneinander.

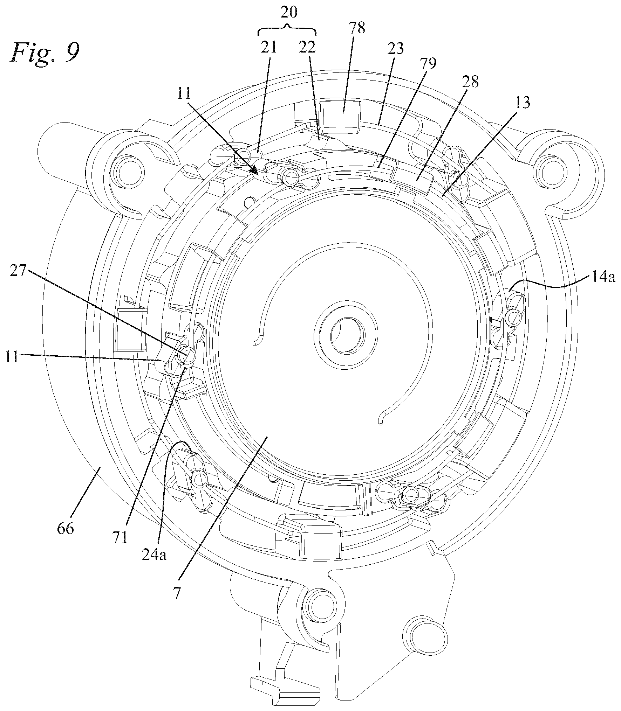

In Fig. 9 ist die Anordnung der beiden Koppeleinrichtungen 10 und 20 im Einzelnen gezeigt. Dabei sind von der ersten Koppeleinrichtung 10 lediglich die ersten Koppelelemente 11 dargestellt. Die ersten Koppelelemente 11 der ersten Koppeleinrichtung 10 sind radial innerhalb der Kontaktbereiche 14a gelagert. Die ersten Koppelelemente 21 der zweiten Koppeleinrichtung 20 sind radial außerhalb der Kontaktbereiche 24a gelagert. Die Klinken, die die ersten Koppelelemente 11 und die ersten Koppelelemente 21 bilden, sind vorteilhaft identisch ausgebildet. Wie Fig. 9 und Fig. 10 zeigen, sind benachbart zu den Haltearmen 28 am Federgehäuse 7 Entformungsöffnungen 79 ausgebildet, so dass die Haltearme 28 integral mit dem Federgehäuse 7 in einem Gussverfahren herstellbar sind.

Fig. 10 zeigt die Anordnung der zweiten Koppelelemente 22 der zweiten Koppeleinrichtung 20 im zweiten Längsabschnitt 38 am Außenumfang 41 des Federgehäuses 7.

Wie Fig. 10 auch zeigt, besitzt das Federgehäuse 7 Aufnahmeöffnungen 39, in die die ersten Koppelelemente 11 der ersten Koppeleinrichtung 10 mit ihren Lagerzapfen 25 eingeklipst sind (Fig. 7).

Wie Fig. 11 zeigt, ist zwischen dem ersten Längsabschnitt 37 und dem zweiten Längsabschnitt 38 ein Abstand h gebildet. Der Abstand h beträgt vorzugsweise etwa 1 mm bis 15 mm, insbesondere weniger als 5 mm. Die Breite i des ersten Längsabschnitts 37 und die Breite k des zweiten Längsabschnitts 38 ist jeweils deutlich größer als der Abstand h. Bevorzugt beträgt die Breite i und/oder die Breite k mindestens das Doppelte, insbesondere mindestens das Dreifache des Abstands h. Es kann auch zweckmäßig sein, dass die Längsabschnitte 37 und 38 ohne Abstand aneinander angrenzen. Um eine kurze axiale Baulänge zu erzielen, ist der Abstand h zu minimieren. Die Breite i des ersten Längsabschnitts 37 entspricht der Breite der ersten Kontaktstellen 14 und insbesondere der Breite der Kontaktbereiche 14a an den ersten Koppelelementen 11 der ersten Koppeleinrichtung 10. Die Breite k entspricht der Breite der zweiten Kontaktstellen 24 und insbesondere der Breite der zweiten Koppelelemente 22 der zweiten Koppeleinrichtung 20. Die Breite i und die Breite k können näherungsweise gleich groß sein. Die Längsabschnitte 37 und 38, in denen die Kontaktstellen 14 bzw. 24 der ersten Koppeleinrichtung 10 und der zweiten Koppeleinrichtung 20 angeordnet sind, überlappen sich in Richtung der Drehachse 15 vorteilhaft nicht. Die Breiten i und k sowie der Abstand h und die Breite b sind jeweils parallel zur Drehachse 15 (Fig. 3) gemessen. Die Summe der Breite i und der Breite k beträgt vorteilhaft mindestens 70%, insbesondere mindestens 80% der Breite b des Federgehäuses 7.

Die axiale Überlappung f (Fig. 7) des Federgehäuses 7 mit der Seilrolle 3 ist vorteilhaft mindestens so groß wie die Länge i des ersten Längsabschnitts 37. Der erste Längsabschnitt 37 taucht insbesondere vollständig in die Ausnehmung 43 (Fig. 4) der Seilrolle 3 ein. Der Federaufnahmeraum 45 erstreckt sich vorteilhaft in axialer Richtung der Drehachse 15 über beide Längsabschnitte 37 und 38 des Federgehäuses 7. Der Federaufnahmeraum 45 taucht vorteilhaft in die Ausnehmung 43 (Fig. 4) der Seilrolle 3 ein, wobei in axialer Richtung der Drehachse 15 die Seitenwand 42 des Federgehäuses 7 direkt benachbart zur Seilrolle 3 liegt und in radialer Richtung die erste Koppeleinrichtung 10 zwischen dem Federaufnahmeraum 45 und der inneren Umfangsfläche 44 (Fig. 4) der Seilrolle 3 angeordnet ist.

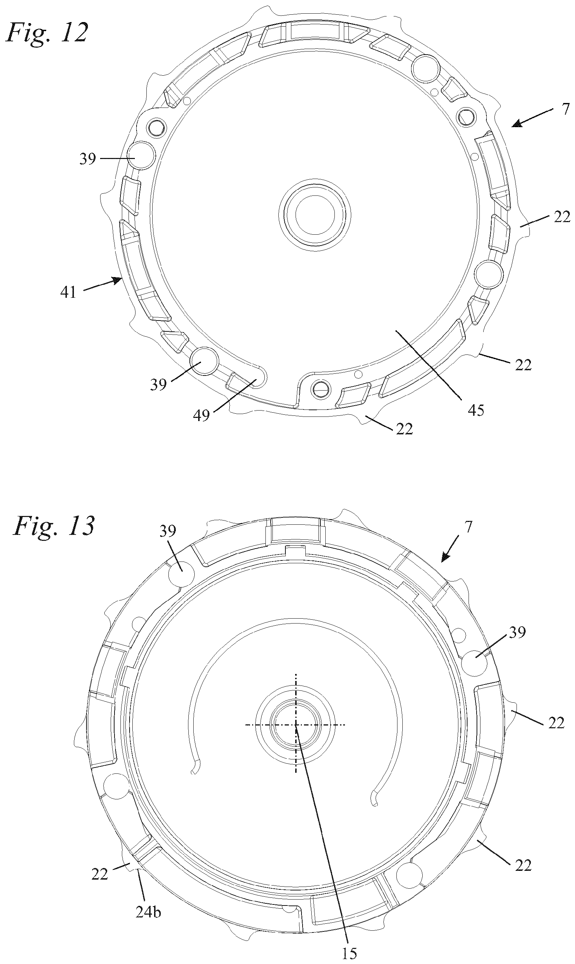

Wie Fig. 12 zeigt, besitzt das Federgehäuse 7 zur Einhängung des äußeren Endes 47 der Spannfeder 40 einen Einhängeabschnitt 49. Die zweiten Koppelemente 22 sind gleichmäßig verteilt am Außenumfang 41 des Federgehäuses 7 angeordnet. Dies ist auch in Fig. 13 gezeigt. Wie die Figuren 12 und 13 zeigen, sind die Aufnahmeöffnungen 39, die die Lagerstellen für die ersten Koppelelemente 11 bilden, radial außerhalb des Federaufnahmeraums 45 und im Ausführungsbeispiel in axialer Überdeckung zum Federaufnahmeraum 45 angeordnet.

## Patentansprüche

1. Anwerfvorrichtung zum Starten eines Verbrennungsmotors (2), wobei die Anwerfvorrichtung (1) ein Gehäuse (5) umfasst, gegenüber dem eine Seilrolle (3), ein Federgehäuse (7) und ein Mitnehmer (8) um eine Drehachse (15) drehbar gelagert sind, wobei zwischen dem Gehäuse (5) und der Seilrolle (3) eine Rückholfeder (9) so angeordnet ist, dass sie bei einer Drehbewegung der Seilrolle (3) in einer Anwerfrichtung (16) um die Drehachse (15) gespannt wird, wobei zwischen der Seilrolle (3) und dem Federgehäuse (7) eine erste Koppeleinrichtung (10) bei einer Drehbewegung der Seilrolle (3) in Anwerfrichtung (16) eine drehfeste Verbindung zwischen der Seilrolle (3) und dem Federgehäuse (7) herstellt, und wobei die erste Koppeleinrichtung (10) bei einer Drehbewegung der Seilrolle (3) in einer der Anwerfrichtung (16) entgegengesetzten Gegenrichtung (17) als Freilauf zwischen der Seilrolle (3) und dem Federgehäuse (7) wirkt, wobei das Federgehäuse (7) einen Federaufnahmeraum (45) für eine Spannfeder (40) aufweist, wobei das Federgehäuse (7) mit dem Mitnehmer (8) über die Spannfeder (40) verbunden ist, wobei an einem Außenumfang (41) des Federgehäuses (7) eine zweite Koppeleinrichtung (20) angeordnet ist, die bei einer Drehbewegung der Seilrolle (3) in Anwerfrichtung (16) als Freilauf zwischen dem Federgehäuse (7) und dem Gehäuse (5) wirkt, wobei die zweite Koppeleinrichtung (20) eine Drehbewegung des Federgehäuses (7) gegenüber dem Gehäuse (5) in Gegenrichtung (17) unterbindet, wobei der Mitnehmer (8) zur Kopplung der Anwerfvorrichtung (1) mit einer Motorwelle (4) des Verbrennungsmotors (2) vorgesehen ist, wobei die erste Koppeleinrichtung (10) mindestens ein erstes Koppelelement (11) und mindestens ein zweites Koppelelement (12) umfasst, und wobei das mindestens eine erste Koppelelement (11) der ersten Koppeleinrichtung (10) mit dem mindestens einen zweiten Koppelelement (12) der ersten Koppeleinrichtung (10) bei der Herstellung der drehfesten Verbindung an mindestens einer ersten Kontaktstelle (14) zusammenwirkt, wobei die mindestens eine erste Kontaktstelle (14) zur Drehachse (15) einen Abstand (e) besitzt, der mindestens so groß ist wie der maximale Abstand (c) der Spannfeder (40) zur Drehachse (15),
**dadurch gekennzeichnet, dass** das Federgehäuse (7) an seinem Außenumfang (41) von der Seilrolle (3) teilweise übergriffen ist.

2. Anwerfvorrichtung nach Anspruch 1,
**dadurch gekennzeichnet, dass** die erste Koppeleinrichtung (10) und die Spannfeder (40) sich in axialer Richtung der Drehachse (15) überdecken.

3. Anwerfvorrichtung nach Anspruch 1 oder 2,
**dadurch gekennzeichnet, dass** eines der beiden zusammenwirkenden Koppelelemente (11, 12) der ersten Koppeleinrichtung (10) am Federgehäuse (7) angeordnet ist, und dass das andere der beiden Koppelelemente (11, 12) der ersten Koppeleinrichtung (10) an einer konkaven inneren Umfangsfläche (44) der Seilrolle (3) angeordnet ist.

4. Anwerfvorrichtung nach einem der Ansprüche 1 bis 3,
**dadurch gekennzeichnet, dass** die zweite Koppeleinrichtung (20) mindestens ein erstes Koppelelement (21) und mindestens ein zweites Koppelelement (22) umfasst, wobei das mindestens eine erste Koppelelement (21) der zweiten Koppeleinrichtung (20) mit dem mindestens einen zweiten Koppelelement (22) der zweiten Koppeleinrichtung (20) beim Unterbinden einer Drehbewegung des Federgehäuses (7) in der Gegenrichtung (17) an mindestens einer zweiten Kontaktstelle (24) zusammenwirkt.

5. Anwerfvorrichtung nach Anspruch 4,
**dadurch gekennzeichnet, dass** die mindestens eine zweite Kontaktstelle (24) zur Drehachse (15) einen Abstand (d) besitzt, der mindestens so groß ist wie der maximale Abstand (c) der Spannfeder (40) zur Drehachse (15).

6. Anwerfvorrichtung nach Anspruch 4 oder 5,
**dadurch gekennzeichnet, dass** der größte Abstand (g) des Mitnehmers (8) zur Drehachse (15) kleiner ist als der Abstand (e) der mindestens einen ersten Kontaktstelle (14) zur Drehachse (15) und kleiner ist als der Abstand (d) der mindestens einen zweiten Kontaktstelle (24) zur Drehachse (15).

7. Anwerfvorrichtung nach einem der Ansprüche 4 bis 6,
**dadurch gekennzeichnet, dass** das mindestens eine erste Koppelelement (11) der ersten Koppeleinrichtung (10) und das mindestens eine Koppelelement (21) der zweiten Koppeleinrichtung (20) jeweils eine Klinke ist, dass das mindestens eine zweite Koppelelement (12) der ersten Koppeleinrichtung (10) und das mindestens eine zweite Koppelelement (22) der zweiten Koppeleinrichtung (20) jeweils ein Rastnocken ist, und dass am Federgehäuse (7) die mindestens eine Klinke der einen Koppeleinrichtung (10, 20) und der mindestens eine Rastnocken der anderen Koppeleinrichtung (10, 20) angeordnet sind.

8. Anwerfvorrichtung nach einem der Ansprüche 4 bis 7,
**dadurch gekennzeichnet, dass** die erste Kontaktstelle (14) der ersten Koppeleinrichtung (10) in einem ersten axialen Abschnitt (37) der Anwerfvorrichtung (1) angeordnet ist und die zweite Kontaktstelle (24) der zweiten Koppeleinrichtung (20) in einem zweiten axialen Abschnitt (38) der Anwerfvorrichtung (1) und dass der erste axiale Abschnitt (37) und der zweite axiale Abschnitt (38) sich in Richtung der Drehachse (15) nicht überlappen.

9. Anwerfvorrichtung nach einem der Ansprüche 1 bis 8,
**dadurch gekennzeichnet, dass** mindestens ein am Federgehäuse (7) gelagertes Koppelelement (11) eine Klinke ist und dass die Lagerstelle der mindestens einen am Federgehäuse (7) gelagerten Klinke bezogen auf die Drehachse (5) radial außerhalb des Federaufnahmeraums (45) angeordnet ist.

10. Anwerfvorrichtung nach einem der Ansprüche 1 bis 9,
**dadurch gekennzeichnet, dass** die erste Koppeleinrichtung (10) und die zweite Koppeleinrichtung (20) sich in radialer Richtung der Drehachse (15) überlappen.

11. Anwerfvorrichtung nach einem der Ansprüche 1 bis 10,
**dadurch gekennzeichnet, dass** das Federgehäuse (7) und die Seilrolle (3) sich in axialer Richtung der Drehachse (15) überdecken.

12. Anwerfvorrichtung nach einem der Ansprüche 1 bis 11,
**dadurch gekennzeichnet, dass** das Federgehäuse (7) eine in Richtung der Drehachse (15) gemessene Breite (b) aufweist, dass die Seilrolle (3) eine Ausnehmung (43) aufweist, in die das Federgehäuse (7) ragt, und dass die Seilrolle (3) und das Federgehäuse (7) eine axiale Überlappung (f) aufweisen, die mindestens 25% der Breite (b) des Federgehäuses (7) beträgt.

13. Anwerfvorrichtung nach einem der Ansprüche 1 bis 12,
**dadurch gekennzeichnet, dass** das Federgehäuse (7) einen Lagerdom (46) zur Lagerung des Federgehäuses (7) auf einem Lagerzapfen (6) des Gehäuses (5) besitzt, und dass der Lagerdom (46) in den Federaufnahmeraum (45) hineinragt.

14. Anwerfvorrichtung nach Anspruch 13,
**dadurch gekennzeichnet, dass** der Mitnehmer (8) den Lagerdom (46) des Federgehäuses (7) in axialer Richtung der Drehachse (15) überlappt.

15. Anwerfvorrichtung nach einem der Ansprühe 1 bis 14,
**dadurch gekennzeichnet, dass** mindestens eine Koppeleinrichtung (10, 20) mindestens zwei erste Koppelelemente (11, 21) umfasst, und dass die mindestens zwei ersten Koppelelemente (11, 21) von einer einzigen Feder (13, 23) beaufschlagt sind.

16. Anwerfvorrichtung nach Anspruch 15,
**dadurch gekennzeichnet, dass** die Feder (13, 23) die Form eines Ringsegments hat und die Feder (13, 23) die mindestens zwei ersten Koppelelemente (11, 21) bezogen auf die Drehachse (15) in radialer Richtung (70) beaufschlagt.

17. Arbeitsgerät mit einer Anwerfvorrichtung nach einem der Ansprüche 1 bis 16, wobei das Arbeitsgerät (50) einen Verbrennungsmotor (2) mit einer Motorwelle (4) umfasst, und wobei die Anwerfvorrichtung (1) über eine dritte Koppeleinrichtung (30) an die Motorwelle (4) des Arbeitsgeräts (50) gekoppelt ist, wobei die dritte Koppeleinrichtung (30) am Mitnehmer (8) angeordnete Koppelelemente umfasst.

## Claims

1. Starting device for starting a combustion engine (2), wherein the starting device (1) comprises a housing (5) relative to which a rope pulley (3), a spring housing (7) and an entrainer (8) are mounted so as to be rotatable about a rotational axis (15), wherein a return spring (9) is arranged between the housing (5) and the rope pulley (3) so as to be tensioned in the event of a rotational movement of the rope pulley (3) in a starting direction (16) about the rotational axis (15), wherein, between the rope pulley (3) and the spring housing (7), a first coupling unit (10) produces a rotationally conjoint connection between the rope pulley (3) and the spring housing (7) in the event of a rotational movement of the rope pulley (3) in the starting direction (16), and wherein the first coupling unit (10) acts as a freewheel between the rope pulley (3) and the spring housing (7) in the event of a rotational movement of the rope pulley (3) in an opposite direction (17) which is opposite to the starting direction (16), wherein the spring housing (7) has a spring receiving space (45) for a tension spring (40), wherein the spring housing (7) is connected to the entrainer (8) by means of the tension spring (40), wherein a second coupling unit (20) is arranged on an outer circumference (41) of the spring housing (7), said second coupling unit acting as a freewheel between the spring housing (7) and the housing (5) in the event of a rotational movement of the rope pulley (3) in the starting direction (16), wherein the second coupling unit (20) prevents a rotational movement of the spring housing (7) relative to the housing (5) in the opposite direction (17), wherein the entrainer (8) is provided for coupling the starting device (1) to an engine shaft (4) of the combustion engine (2), wherein the first coupling unit (10) comprises at least one first coupling element (11) and at least one second coupling element (12), and wherein the at least one first coupling element (11) of the first coupling unit (10) interacts with the at least one second coupling element (12) of the first coupling unit (10) at at least one first contact location (14) when the rotationally conjoint connection is produced, wherein the at least one first contact location (14) has a spacing (e) to the rotational axis (15), said spacing being at least as large as the maximum spacing (c) of the tension spring (40) to the rotational axis (15), **characterized in that**, at its outer circumference (41), the spring housing (7) is partially engaged over by the rope pulley (3).

2. Starting device according to Claim 1,
**characterized in that** the first coupling unit (10) and the tension spring (40) overlap in an axial direction of the rotational axis (15).

3. Starting device according to Claim 1 or 2,
**characterized in that** one of the two interacting coupling elements (11, 12) of the first coupling unit (10) is arranged on the spring housing (7), and **in that** the other of the two coupling elements (11, 12) of the first coupling unit (10) is arranged on a concave inner circumferential surface (44) of the rope pulley (3).

4. Starting device according to one of Claims 1 to 3,
**characterized in that** the second coupling unit (20) comprises at least one first coupling element (21) and at least one second coupling element (22), wherein the at least one first coupling element (21) of the second coupling unit (20) interacts with the at least one second coupling element (22) of the second coupling unit (20) at at least one second contact location (24) during the prevention of a rotational movement of the spring housing (7) in the opposite direction (17).

5. Starting device according to Claim 4,
**characterized in that** the at least one second contact location (24) has a spacing (d) to the rotational axis (15), said spacing being at least as large as the maximum spacing (c) of the tension spring (40) to the rotational axis (15).

6. Starting device according to Claim 4 or 5,
**characterized in that** the largest spacing (g) of the entrainer (8) to the rotational axis (15) is smaller than the spacing (e) of the at least one first contact location (14) to the rotational axis (15) and is smaller than the spacing (d) of the at least one second contact location (24) to the rotational axis (15).

7. Starting device according to one of Claims 4 to 6,
**characterized in that** the at least one first coupling element (11) of the first coupling unit (10) and the at least one coupling element (21) of the second coupling unit (20) are in each case a pawl, **in that** the at least one second coupling element (12) of the first coupling unit (10) and the at least one second coupling element (22) of the second coupling unit (20) are in each case a latching cam, and **in that** the at least one pawl of the one coupling unit (10, 20) and the at least one latching cam of the other coupling unit (10, 20) are arranged on the spring housing (7).

8. Starting device according to one of Claims 4 to 7,
**characterized in that** the first contact location (14) of the first coupling unit (10) is arranged in a first axial portion (37) of the starting device (1) and the second contact location (24) of the second coupling unit (20) is arranged in a second axial portion (38) of the starting device (1), and **in that** the first axial portion (37) and the second axial portion (38) do not overlap in the direction of the rotational axis (15).

9. Starting device according to one of Claims 1 to 8,
**characterized in that** at least one coupling element (11) mounted on the spring housing (7) is a pawl, and **in that** the mounting location of the at least one pawl mounted on the spring housing (7) is arranged radially outside the spring receiving space (45) with respect to the rotational axis (5).

10. Starting device according to one of Claims 1 to 9,
**characterized in that** the first coupling unit (10) and the second coupling unit (20) overlap in a radial direction of the rotational axis (15).

11. Starting device according to one of Claims 1 to 10,
**characterized in that** the spring housing (7) and the rope pulley (3) overlap in an axial direction of the rotational axis (15).

12. Starting device according to one of Claims 1 to 11,
**characterized in that** the spring housing (7) has a width (b) measured in the direction of the rotational axis (15), **in that** the rope pulley (3) has a recess (43) into which the spring housing (7) projects, and **in that** the rope pulley (3) and the spring housing (7) have an axial overlap (f) which amounts to at least 25% of the width (b) of the spring housing (7).

13. Starting device according to one of Claims 1 to 12,
**characterized in that** the spring housing (7) has a bearing dome (46) for the mounting of the spring housing (7) on a bearing pin (6) of the housing (5), and **in that** the bearing dome (46) projects into the spring receiving space (45).

14. Starting device according to Claim 13,
**characterized in that** the entrainer (8) overlaps the bearing dome (46) of the spring housing (7) in an axial direction of the rotational axis (15).

15. Starting device according to one of Claims 1 to 14,
**characterized in that** at least one coupling unit (10, 20) comprises at least two first coupling elements (11, 21), and **in that** the at least two first coupling elements (11, 21) are acted on by a single spring (13, 23).

16. Starting device according to Claim 15,
**characterized in that** the spring (13, 23) has the form of a ring segment, and the spring (13, 23) acts on the at least two first coupling elements (11, 21) in a radial direction (70) with respect to the rotational axis (15).

17. Work apparatus having a starting device according to one of Claims 1 to 16, wherein the work apparatus (50) comprises a combustion engine (2) with an engine shaft (4), and wherein the starting device (1) is coupled by means of a third coupling unit (30) to the engine shaft (4) of the work apparatus (50), wherein the third coupling unit (30) comprises coupling elements arranged on the entrainer (8).

## Revendications

1. Dispositif de démarrage pour démarrer un moteur à combustion interne (2), le dispositif de démarrage (1) comprenant un boîtier (5) par rapport auquel une poulie (3), un boîtier de ressort (7) et un entraîneur (8) sont montés de manière rotative autour d'un axe de rotation (15), un ressort de rappel (9) étant agencé entre le boîtier (5) et la poulie (3) de telle sorte qu'il est tendu autour de l'axe de rotation (15) lors d'un mouvement de rotation de la poulie (3) dans une direction de démarrage (16), un premier appareil de couplage (10) établissant entre la poulie (3) et le boîtier de ressort (7) une liaison solidaire en rotation entre la poulie (3) et le boîtier de ressort (7) lors d'un mouvement de rotation de la poulie (3) dans la direction de démarrage (16), et le premier appareil de couplage (10) agissant en tant que roue libre entre la poulie (3) et le boîtier de ressort (7) lors d'un mouvement de rotation de la poulie (3) dans une direction opposée (17) contraire à la direction de démarrage (16), le boîtier de ressort (7) présentant un espace de réception de ressort (45) pour un ressort de tension (40), le boîtier de ressort (7) étant relié à l'entraîneur (8) par l'intermédiaire du ressort de tension (40), un deuxième appareil de couplage (20) étant agencé sur une périphérie extérieure (41) du boîtier de ressort (7), qui, lors d'un mouvement de rotation de la poulie (3) dans la direction de démarrage (16), agit en tant que roue libre entre le boîtier de ressort (7) et le boîtier (5), le deuxième appareil de couplage (20) empêchant un mouvement de rotation du boîtier de ressort (7) par rapport au boîtier (5) dans la direction opposée (17), l'entraîneur (8) étant prévu pour coupler le dispositif de démarrage (1) à un arbre moteur (4) du moteur à combustion interne (2), le premier appareil de couplage (10) comprenant au moins un premier élément de couplage (11) et au moins un deuxième élément de couplage (12), et l'au moins un premier élément de couplage (11) du premier appareil de couplage (10) coopérant avec l'au moins un deuxième élément de couplage (12) du premier appareil de couplage (10) lors de l'établissement de la liaison solidaire en rotation en au moins un premier point de contact (14), l'au moins un premier point de contact (14) se trouvant à une distance (e) de l'axe de rotation (15) qui est au moins aussi grande que la distance maximale (c) du ressort de tension (40) par rapport à l'axe de rotation (15), **caractérisé en ce que** le boîtier de ressort (7) est partiellement recouvert par la poulie (3) sur sa périphérie extérieure (41).

2. Dispositif de démarrage selon la revendication 1,
**caractérisé en ce que** le premier appareil de couplage (10) et le ressort de tension (40) se recouvrent dans la direction axiale de l'axe de rotation (15).

3. Dispositif de démarrage selon la revendication 1 ou 2,
**caractérisé en ce que** l'un des deux éléments de couplage (11, 12) du premier appareil de couplage (10) est agencé sur le boîtier de ressort (7), et **en ce que** l'autre des deux éléments de couplage (11, 12) du premier appareil de couplage (10) est agencé sur une surface périphérique intérieure concave (44) de la poulie (3).

4. Dispositif de démarrage selon l'une quelconque des revendications 1 à 3, **caractérisé en ce que** le deuxième appareil de couplage (20) comprend au moins un premier élément de couplage (21) et au moins un deuxième élément de couplage (22), l'au moins un premier élément de couplage (21) du deuxième appareil de couplage (20) coopérant avec l'au moins un deuxième élément de couplage (22) du deuxième appareil de couplage (20) lors de l'empêchement d'un mouvement de rotation du boîtier de ressort (7) dans la direction opposée (17) en au moins un deuxième point de contact (24).

5. Dispositif de démarrage selon la revendication 4,
**caractérisé en ce que** l'au moins un deuxième point de contact (24) se trouve à une distance (d) de l'axe de rotation (15) qui est au moins aussi grande que la distance maximale (c) du ressort de tension (40) par rapport à l'axe de rotation (15).

6. Dispositif de démarrage selon la revendication 4 ou 5,
**caractérisé en ce que** la distance la plus grande (g) de l'entraîneur (8) par rapport à l'axe de rotation (15) est inférieure à la distance (e) de l'au moins un premier point de contact (14) par rapport à l'axe de rotation (15) et est inférieure à la distance (d) de l'au moins un deuxième point de contact (24) par rapport à l'axe de rotation (15).

7. Dispositif de démarrage selon l'une quelconque des revendications 4 à 6, **caractérisé en ce que** l'au moins un premier élément de couplage (11) du premier appareil de couplage (10) et l'au moins un élément de couplage (21) du deuxième appareil de couplage (20) sont chacun un cliquet, **en ce que** l'au moins un deuxième élément de couplage (12) du premier appareil de couplage (10) et l'au moins un deuxième élément de couplage (22) du deuxième appareil de couplage (20) sont chacun une came d'encliquetage, et **en ce que** l'au moins un cliquet de l'un des appareils de couplage (10, 20) et l'au moins une came d'encliquetage de l'autre appareil de couplage (10, 20) sont agencés sur le boîtier de ressort (7).

8. Dispositif de démarrage selon l'une quelconque des revendications 4 à 7, **caractérisé en ce que** le premier point de contact (14) du premier appareil de couplage (10) est agencé dans une première section axiale (37) du dispositif de démarrage (1) et le deuxième point de contact (24) du deuxième appareil de couplage (20) dans une deuxième section axiale (38) du dispositif de démarrage (1) et **en ce que** la première section axiale (37) et la deuxième section axiale (38) ne se chevauchent pas dans la direction de l'axe de rotation (15).

9. Dispositif de démarrage selon l'une quelconque des revendications 1 à 8, **caractérisé en ce qu'**au moins un élément de couplage (11) monté sur le boîtier de ressort (7) est un cliquet et **en ce que** le point d'appui de l'au moins un cliquet monté sur le boîtier de ressort (7) est agencé radialement à l'extérieur de l'espace de réception de ressort (45) par rapport à l'axe de rotation (5).

10. Dispositif de démarrage selon l'une quelconque des revendications 1 à 9, **caractérisé en ce que** le premier appareil de couplage (10) et le deuxième appareil de couplage (20) se chevauchent dans la direction radiale de l'axe de rotation (15).

11. Dispositif de démarrage selon l'une quelconque des revendications 1 à 10, **caractérisé en ce que** le boîtier de ressort (7) et la poulie (3) se recouvrent dans la direction axiale de l'axe de rotation (15).

12. Dispositif de démarrage selon l'une quelconque des revendications 1 à 11, **caractérisé en ce que** le boîtier de ressort (7) présente une largeur (b) mesurée dans la direction de l'axe de rotation (15), **en ce que** la poulie (3) présente un évidement (43) dans lequel le boîtier de ressort (7) fait saillie, et **en ce que** la poulie (3) et le boîtier de ressort (7) présentent un chevauchement axial (f) qui représente au moins 25 % de la largeur (b) du boîtier de ressort (7).

13. Dispositif de démarrage selon l'une quelconque des revendications 1 à 12, **caractérisé en ce que** le boîtier de ressort (7) possède un dôme de palier (46) pour le montage du boîtier de ressort (7) sur un tourillon de palier (6) du boîtier (5), et **en ce que** le dôme de palier (46) pénètre dans l'espace de réception de ressort (45).

14. Dispositif de démarrage selon la revendication 13,
**caractérisé en ce que** l'entraîneur (8) chevauche le dôme de palier (46) du boîtier de ressort (7) dans la direction axiale de l'axe de rotation (15).

15. Dispositif de démarrage selon l'une quelconque des revendications 1 à 14, **caractérisé en ce qu'**au moins un appareil de couplage (10, 20) comprend au moins deux premiers éléments de couplage (11, 21), et **en ce que** les au moins deux premiers éléments de couplage (11, 21) sont sollicités par un seul ressort (13, 23).

16. Dispositif de démarrage selon la revendication 15,
**caractérisé en ce que** le ressort (13, 23) a la forme d'un segment annulaire et le ressort (13, 23) sollicite les au moins deux premiers éléments de couplage (11, 21) dans la direction radiale (70) par rapport à l'axe de rotation (15).

17. Outil de travail avec un dispositif de démarrage selon l'une quelconque des revendications 1 à 16,
l'outil de travail (50) comprenant un moteur à combustion interne (2) avec un arbre de moteur (4), et le dispositif de démarrage (1) étant couplé à l'arbre de moteur (4) de l'outil de travail (50) par l'intermédiaire d'un troisième appareil de couplage (30), le troisième appareil de couplage (30) comprenant des éléments de couplage agencés sur l'entraîneur (8).
